Europäisches Patentamt

European Patent Office

Office européen des brevets

(11) Numéro de publication: **0 507 371 A1**

## (12) DEMANDE DE BREVET EUROPEEN

(21) Numéro de dépôt: **92200695.2**

(22) Date de dépôt: **11.03.92**

(51) Int. Cl.⁵: **F16K 39/02, B67D 5/58**

(30) Priorité: **27.03.91 FR 9103736**

(43) Date de publication de la demande:
**07.10.92 Bulletin 92/41**

(84) Etats contractants désignés:
**AT BE CH DE DK ES FR GB IT LI NL SE**

(71) Demandeur: **SCHLUMBERGER INDUSTRIES**
**50, avenue Jean Jaurès**
**F-92120 Montrouge(FR)**

(72) Inventeur: **Janssen, Sylvain**
**38, rue du Bois de Boulogne**
**F-92200 Neuilly s/Seine(FR)**
Inventeur: **Fournier, Jacques**
**19, rue de la Passerelle**
**F-91220 Bretigny s/Orge(FR)**
Inventeur: **Dumont, Bernard**
**4, rue des Martyrs du 8 Février 1962**
**F-94110 Arcueil(FR)**

(54) **Vanne à clapet compensé et distributeur d'hydrocarbure en faisant application.**

(57) Vanne à clapet compensé notamment pour cuve de désaération pour distributeur d'hydrocarbures.

La vanne comprend un clapet (38) dont l'extrémité (38a) peut coopérer avec son siège (36). Le clapet est prolongé par une pièce cylindrique (58) engagée à coulissement dans une coiffe (60). Une conduite interne axiale (74) met en communication l'extrémité active (38a) du clapet avec une chambre (64) à volume variable disposée entre la face (58a) du cylindre (58) et la coiffe (60).

FIG.2

L'invention a pour objet une vanne à clapet compensé et un distributeur d'hydrocarbure en faisant application.

De façon plus précise, l'invention concerne notamment une vanne dont le déplacement du clapet est commandé par le déplacement d'un flotteur disposé dans une cuve contenant un liquide.

Un tel type de vanne se trouve notamment dans les circuits de distributeur d'hydrocarbures et, plus précisément, dans la partie dite de désaération. Dans cette partie du circuit, ainsi qu'on le décrira ultérieurement plus en détails, l'hydrocarbure est stocké temporairement dans une cuve dont le niveau est réglé par un flotteur commandant le clapet d'une vanne pour permettre l'écoulement d'hydrocarbure afin de maintenir le niveau de celui-ci dans la cuve sensiblement constant.

Dans une telle installation, un des problèmes consiste dans le fait que, lorsque le clapet est en position fermée, la pression appliquée sur la face du clapet tournée vers son siège est variable du fait que, dans une telle installation, cette zone du circuit est reliée à l'aspiration d'une pompe. On comprend que, compte tenu de la pression variable existant sur le clapet en position fermée, cette pression étant une dépression, la force que doit exercer le flotteur pour provoquer l'ouverture du clapet va déprendre très sensiblement de la pression appliquée au clapet. On risque d'avoir ainsi un mauvais fonctionnement du réglage de niveau dans la cuve de désaération. Il va de soi que, dans d'autres circonstances que celles énoncées ci-dessus, on utilise un clapet dont la face de fermeture peut être également soumise à des pressions variables, ce qui modifie les conditions du point d'ouverture du clapet.

L'invention n'est donc nullement limitée à une vanne à clapet comprensé pour une cuve de désaération de distributeur d'hydrocarbure mais elle en constitue une application particulièrement intéressante.

Afin de remédier à ces inconvénients, un objet de l'invention est de fournir une vanne à clapet compensé qui permette de commander l'ouverture du clapet totalement indépendamment de la pression qui est appliquée sur la face de fermeture du clapet.

Pour atteindre ce but, la vanne à clapet compensé selon l'invention qui comprend un siège et un clapet mobile présentant une première face tournée vers le siège et une deuxième face opposée à la première face et des moyens de commande du déplacement du clapet, se caractérise en ce qu'elle comprend en outre des moyens pour prélever une information de pression du fluide à proximité de la première face du clapet et des moyens pour appliquer à ladite deuxième face du clapet à partir de l'information de pression une force antagoniste dont l'intensité est sensiblement égale à la force résultant de l'application de la pression sur la première face du clapet.

On comprend qu'ainsi la force antagoniste appliquée à la deuxième face du clapet compense très précisément la force résultant de la pression appliquée sur la première face du clapet. En outre, comme cette force antagoniste est élaborée à partir de l'information de pression fournissant la pression appliquée sur la première face du clapet, on obtient effectivement en permanence une compensation du clapet permettant ainsi une commande de l'ouverture du clapet et une régulation, indépendamment de la pression appliquée sur sa première face.

De préférence, les moyens pour appliquer la force antagoniste au clapet comprennent des moyens pour appliquer la pression régnant sur la première face du clapet sur une portion de la deuxième face du clapet dont la surface, dans un plan perpendiculaire à l'axe de déplacement du clapet, est sensiblement égale à la surface de la portion de la première face du clapet soumise à la pression lorsque le clapet est en appui sur son siège.

On comprend que, selon ce mode de mise en oeuvre préféré, l'égalité des surfaces auxquelles sont appliquées les pressions, permet d'élaborer directement la force antagoniste à l'aide de la pression elle-même appliquée sur la première face du clapet. On obtient ainsi une excellente compensation du clapet quelles que soient les fluctuations de la pression appliquée sur la première face de celui-ci.

L'invention concerne également l'application de la vanne définie ci-dessus à la réalisation d'un distributeur d'hydrocarbure et plus précisément au système de désaération de celui-ci.

D'autres caractéristiques et avantages de la présente invention apparaîtront plus clairement à la lecture de la description qui suit d'un mode de réalisation de l'invention donné à titre d'exemple non limitatif. La description se réfère aux dessins annexés sur lesquels :

- la figure 1 est une vue d'ensemble du système de pompage et de dégazage d'un distributeur d'hydrocarbure d'un type en soi classique : et

- la figure 2 est une vue de détail montrant la vanne de commande de la cuve de désaération selon un mode préféré de réalisation de l'invention.

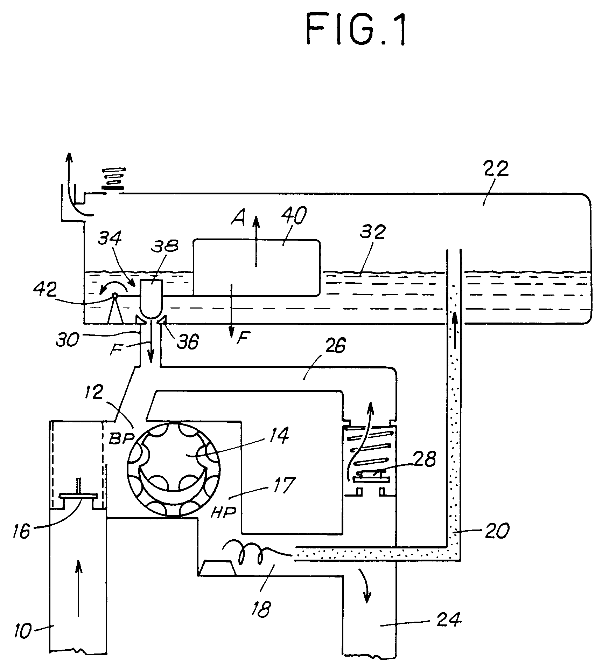

En se référant tout d'abord à la figure 1, on va décrire la partie d'un distributeur d'hydrocarbure correspondant au circuit de pompage et au circuit de dégazage et de désaération.

Sur la figure 1, on a représenté la tubulure d'aspiration 10 qui est raccordée à la cuve de stockage d'hydrocarbure, non représentée, et dont l'autre extrémité débouche à l'entrée 12 de la pompe 14 par l'intermédiaire d'un clapet de pied anti-retour 16. De préférence, la pompe 14 est du type à engrenage excentré tel que décrit dans la demande de brevet européen No. 0 344 059 mais il pourrait bien sûr s'agir de tout autre type de pompes, telles que des pompes à palette. La pompe 14 maintient dans la région 12 une dépression BP qui permet l'aspiration du liquide. L'hydrocarbure est ensuite refoulé par la pompe dans la conduite de sortie 17 à une pression plus élevée HP. Ce débit de liquide est admis latéralement dans un séparateur de gaz liquide 18 qui est, dans l'exemple considéré, du type à vortex. Un tel séparateur est décrit dans la demande de brevet européen No. 0 357 513. Le dispositif 18 a pour but de prélever le gaz qui pourrait éventuellement être présent dans l'hydrocarbure. Ce gaz est prélevé dans la région médiane du séparateur 18 par la conduite axiale 20. La conduite 20 débouche dans une cuve de désaération 22. A la sortie du séparateur 18, le liquide séparé du gaz ressort par la canalisation 24 pour être acheminé vers le groupe mesureur non représenté. En outre, un circuit de dérivation 26 monté en parallèle avec la pompe 14 est commandé par un clapet taré 28 assure le maintien d'une pression de distribution sensiblement constante.

Si l'on revient maintenant à la cuve de désaération 22, on voit que celle-ci est munie à sa partie inférieure d'une conduite de sortie 30 qui débouche dans le circuit de dérivation 26 à proximité de la zone d'aspiration 12 de la pompe 14. Le retour du liquide 32 contenu dans la cuve de désaération 22 dans le circuit de la pompe via la tubulure 30 est contrôlé par une vanne 34 constituée par un siège 36 et un clapet mobile 38. Pour maintenir le niveau du liquide sensiblement constant dans la cuve 22, le clapet 38 est commandé par un flotteur 40. Plus précisément, l'ensemble clapet 38-flotteur 40 est monté à pivotement autour d'un axe fixe 42.

Le système mobile constitué par le flotteur 40 et le clapet 38 est soumis à trois forces dont le moment global tend vers zéro à tout instant. On trouve d'une part le poids P du système mobile, d'autre part la poussée d'Archimède A appliquée au flotteur et d'autre part la force F :

$$F = S(Po-BF)$$

due à la différence des pressions appliquées au clapet, c'est-à-dire d'une part la pression BP régnant dans la tubulure 30 de sortie du liquide et, d'autre part, la pression atmosphérique Po régnant sensiblement dans la cuve. Enfin, dans cette formule, on a appelé S la section efficace du clapet.

On comprend que la pression BP étant variable au cours du temps compte tenu des divers régimes de fonctionnement de la pompe 14 en particulier, le niveau de liquide dans la cuve 22 le sera également et le système peut ainsi entrer en oscillation avec des aspirations saccadées qui peuvent à leur tour provoquer le retour vers la pompe 14 de liquide non complètement désaéré.

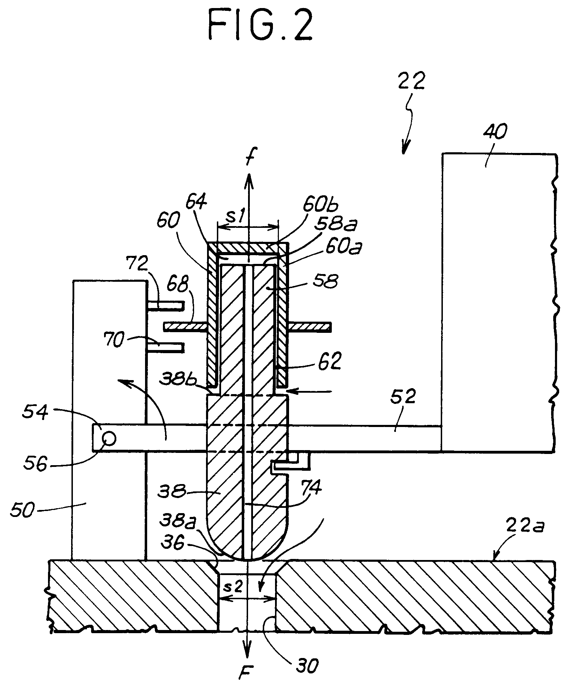

En se référant maintenant à la figure 2, on va décrire en détails un mode de réalisation de la vanne à clapet compensé, ainsi que le montage du clapet à l'intérieur de la cuve 22.

Sur la figure 2, on a représenté plus en détails un support fixe 50 fixé sur le fond 22a de la cuve 22. Le clapet 38 et le flotteur 40 sont tous deux solidaires d'une tige 52 dont l'extrémité libre 54 est montée pivotante autour de l'axe horizontal 56 porté par l'élément support 50. Sur cette figure, on a également fait apparaître la tubulure 30 et le siège 36 de la vanne apte à coopérer avec la première face 38a du clapet. Comme on le voit sur la figure 2, la deuxième face 38b du clapet 38 est prolongée par une pièce cylindrique 58 dont la section droite s1 est sensiblement égale à la section s2 de la tubulure 30, c'est-à-dire à la section efficace du clapet. Sur le prolongement cylindrique 58 est montée librement une coiffe ou chapeau 60 constituée par une paroi cylindrique latérale 60a entourant la portion cylindrique 58 et par un fond plein 60b. La coiffe 60 peut coulisser librement par rapport à la pièce 58 avec un jeu 62 de telle manière que le liquide contenu dans la cuve 22 dans lequel est immergé le clapet ne puisse pénétrer dans une chambre 64 disposée entre l'extrémité 58e de la pièce cylindrique 58 et le fond 60b de la coiffe 60 qu'avec une perte de charge convenable.

En outre, la coiffe 60 est munie d'une pièce annulaire 68 externe qui peut coopérer avec deux butées 70 et 72 solidaires de l'élément support 50 de manière à limiter les possibilités de débattement de la coiffe 60 par rapport à la cuve.

On voit de plus que le clapet 38 et la pièce cylindrique 58 sont traversées par une canalisation axiale 74 qui débouche d'une part dans la face 38a du clapet 38 et d'autre part dans la face 58a de la pièce cylindrique 58. La section du canal 74 est déterminée de telle manière que la pression dans la chambre 64 soit sensiblement en permanence égale à la pression BP appliquée sur la face 38a du clapet quelle que soit sa position, ouverte ou fermée. En outre, le débit de fuite entre la coiffe 60 et la pièce cylindrique 58 est déterminé pour provoquer une perte de charge telle que l'on ait effectivement égalité des pressions ainsi qu'on l'a indiqué précédemment.

On comprend que, en raison de l'égalité des surfaces s1 et s2 d'une part et de l'égalité des pressions appliquées sur la première face 38a du clapet et sur la face 58a de la pièce cylindrique 58 grâce au canal 74 d'autre part, on crée une force antagoniste f̄ qui équilibre exactement la force d'aspiration résultant de la basse pression BP appliquée sur la face 38a du clapet. On a ainsi sensiblement à chaque instant une compensation rigoureuse de la dépression appliquée sur la première face du clapet. Le flotteur 40 crée ainsi une poussée d'Archimède A qui est constante et le niveau du liquide dans la cuve de désaération 22 se trouve ainsi stabilisée.

Il va de soi que l'on pourrait utiliser d'autres systèmes pour élaborer la force antagoniste f̄ opposée à la force d'aspiration F appliquée à la première face du clapet par d'autres moyens. Cependant, le système décrit précédemment présente l'avantage de combiner un effet de compensation très précis tout en ne nécessitant que des modifications réduites à un clapet de type classique.

Comme on l'a déjà indiqué, la vanne à clapet compensé décrite précédemment l'a été dans le cadre du contrôle du niveau dans une cuve de désaération pour distributeur d'hydrocarbure. On comprend cependant qu'un tel clapet compensé pourrait être utilisé dans d'autres installations où il se présente le même problème de force d'aspiration sur la face active du clapet de la vanne.

## Revendications

1. Vanne à clapet compensé incorporée dans un distributeur d'hydrocarbure et ladite vanne comprenant un siège et un clapet mobile présentant une première face tournée vers le siège et une deuxième opposée à ladite première face et des moyens de commande du déplacement dudit clapet, caractérisé en ce qu'elle comprend en outre des moyens (74) pour prélever une information de pression d'hydrocarbure à proximité de ladite première face (38a) et des moyens (58,60) pour appliquer à ladite deuxième face (38b) à partir de ladite information de pression une force antagoniste dont l'intensité est sensiblement égale à la force résultant de l'application de ladite pression (BP) sur ladite première face (38a) du clapet.

2. Vanne à clapet compensé selon la revendication 1, caractérisée en ce que lesdits moyens pour appliquer la force antagoniste comprennent des moyens pour appliquer ladite pression sur une portion (58a) de ladite deuxième face (38b) du clapet (38) dont la surface (s1) dans un plan perpendiculaire à l'axe dudit siège (36) est sensiblement égale à la surface (s2) de la portion de la première face (38a) du clapet soumise à ladite pression (BP) lorsque le clapet (38) est en appui sur son siège (36).

3. Vanne à clapet compensé selon la revendication 2, caractérisée en ce que les moyens pour appliquer ladite force antagoniste comprennent une pièce cylindrique (58) solidaire de ladite deuxième face (38b) et dont la face libre (58a) a une surface (s1) égale à ladite portion de surface et un chapeau (60) définissant une cavité cylindrique (64) dans laquelle est engagée ledit cylindre avec un jeu réduit.

4. Vanne à clapet compensé selon la revendication 3, caractérisée en ce que lesdits moyens pour prélever la pression comprennent un canal (74) traversant ledit clapet (38) et ladite pièce cylindrique (58) et débouchant d'une part dans la portion de la première face (38a) du clapet non recouverte par le siège (36) et d'autre part dans ladite face libre (58a) du cylindre (58) engagée dans ledit chapeau (60).

5. Vanne à clapet compensé selon l'une quelconque des revendications 3 et 4, caractérisée en ce que ledit clapet (38) est solidaire d'un levier (52) dont une extrémité (54) est pivotante et dont l'autre extrémité est solidaire d'un flotteur (40).

6. Vanne à clapet compensé selon l'une quelconque des revendications 3 à 5, caractérisée en ce que ledit chapeau (60) et ledit clapet (38) sont entièrment immergés dans le liquide (32) contenu dans un récipient (22) dont ledit clapet (38) contrôle le niveau de liquide.

7. Vanne à clapet compensé selon la revendication 6, caractérisé en ce que ledit récipient est une cuve de désaération (22) du distributeur d'hydrocarbure et en ce que la conduite d'écoulement (30) contrôlée par ladite vanne (34) débouche dans la zone d'aspiration (12) d'une pompe (14) de mise en circulation de l'hydrocarbure.

# FIG.1

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | GB-A-759 170 (CLYDE CRANE & BOOTH LTD.)<br>* page 2, ligne 84 - ligne 110; figure 2 *<br>--- | 1-4 | F16K39/02<br>B67D5/58 |
| A | FR-A-880 529 (I.G.FARBENINDUSTRIE AG.)<br>* page 2, ligne 32 - ligne 47; figure *<br>--- | 1-3 | |
| A | EP-A-0 226 405 (GILBARCO INC.)<br>* colonne 5, ligne 49 - colonne 6, ligne 11; figure 3B *<br>----- | 1,5-7 | |

|  |  |  | **DOMAINES TECHNIQUES RECHERCHES (Int. Cl.5 )** |
|---|---|---|---|
|  |  |  | F16K<br>B67D |

Le présent rapport a été établi pour toutes les revendications

| Lieu de la recherche | Date d'achèvement de la recherche | Examinateur |
|---|---|---|
| LA HAYE | 19 JUIN 1992 | CHRISTENSEN J.T. |